# EUROPÄISCHE PATENTSCHRIFT

(11) **EP 1 499 426 B1**
(45) Veröffentlichungstag und Bekanntmachung des Hinweises auf die Patenterteilung: **29.03.2006**
(21) Anmeldenummer: 03722446.6
(22) Anmeldetag: 11.04.2003
(51) Int. Cl.: B01D 69/02, B01D 71/62, B01D 71/40, B01D 71/80, C08F 226/10

(54) **VERWENDUNG HYDROPHOB MODIFIZIERTER COPOLYMERE AUF BASIS VON N-VINYLMONOMEREN ZUR HERSTELLUNG VON MEMBRANEN**
USE OF HYDROPHOBICALLY MODIFIED COPOLYMERS BASED ON N-VINYL MONOMERS FOR THE PRODUCTION OF MEMBRANES
UTILISATION DE COPOLYMERES A BASE DE MONOMERES N-VINYLIQUES MODIFIES HYDROPHOBES POUR LA PRODUCTION DE MEMBRANES

(30) Priorität: 18.04.2002 DE 10217440
(43) Veröffentlichungstag der Anmeldung: 26.01.2005
(73) Patentinhaber: BASF Aktiengesellschaft, 67056 Ludwigshafen (DE)
(72) Erfinder: SCHNEIDER, Tanja, 64625 Bensheim (DE); DIETSCHE, Frank, 69198 Schriesheim (DE); SANNER, Axel, 67227 Frankenthal (DE); STEIN, Stefan, 55286 Wörrstadt (DE); NEUBECKER, Karin, 67227 Frankenthal (DE)
(86) Internationale Anmeldenummer: PCT/EP2003/003764
(87) Internationale Veröffentlichungsnummer: WO 2003/086594

(56) Entgegenhaltungen:
- EP-A- 0 523 510
- EP-A- 0 636 404
- WO-A-02/09857
- WO-A-02/076593
- DE-A- 19 814 730
- US-A- 4 304 591
- US-A- 5 411 580

## Beschreibung

Die vorliegende Erfindung betrifft die Verwendung einer Polymerlösung von hydrophoben Polymeren B in Mengen von 50 bis 99,9 Gew.-%, bezogen auf die Gesamtmenge an eingesetzten Polymeren mit Copolymeren A zur Herstellung von semipermeablen Membranen, zur Herstellung von Membranen, wobei Polymere B ausgewählt sind aus der Gruppe bestehend aus Polysulfonen. Polycarbonaten, Polyamiden, Polyvinylchlorid. hydrophob modifizierten Acrylsäurepolymeren, Polyethern, Polyurethanen, Polyurethancopolymeren, wasserunlöslichen Cellulosederivaten und Gemischen solcher Polymere, dadurch gekennzeichnet, dass Copolymere A, enthaltend
a) 50 bis 99 Gew.-% mindestens eines N-Vinyllactams oder N-Vinylamins, ausgewählt aus der Gruppe bestehend aus N-Vinylpyrrolidon, N-Vinylpiperidon, N-Vinylcaprolactam, N-Vinylimidazol, methyliertem N-Vinylimidazol oder N-Vinylformamid und
b) 1 bis 50 Gew.-% mindestens eines Monomeren ausgewählt aus der Gruppe der
   b₁) C₈-C₃₀-Alkylester von monoethylenisch ungesättigten C₃-C₈-Carbonsäuren,
   b₂) N-C₈-C₃₀-Alkyl-substituierten Amide von monoethylenisch ungesättigten C₃-C₈-Carbonsäuren;
   b₃) N,N-C₈-C₃₀-Dialkyl-substituierten Amide von monoethylenisch ungesättigten C₃-C₈-Carbonsäuren;
   b₄) Vinylester von aliphatischen C₈-C₃₀-Carbonsäuren, und der
   b₅) C₈-C₃₀-Alkylvinylether

Gegenstand der vorliegende Erfindung ist weiterhin eine semipermeable Membran, enthaltend die oben beschriebenen Copolymere A sowie die oben beschiebenen hydrophoben Polymer B.

Für eine Vielzahl von technischen Anwendungen werden heutzutage Membranen eingesetzt. So kann mit Hilfe von Membranen durch Umkehrosmose Meerwasser in Trinkwasser überführt werden. Weiterhin eignen sich Membranen zur Reinigung industrieller Abwässer oder zur Rückgewinnung von Wertstoffen, beispielsweise zur Rückgewinnung von Lacken durch Ultrafiltration von Elektrotauchbädern. Auch in den Bereichen Lebensmitteltechnologie, Medizin und Pharmazie finden Membranen zunehmend Anwendung. So können beispielsweise Lösungen verschiedener Makromoleküle mit Hilfe von Membranen fraktioniert werden oder bei der Hämodialyse Harnstoff und Toxine aus dem Blutstrom entfernt werden. Auch bei der hautkontrollierten Abgabe von Arzneistoffen können Membranen eingesetzt werden.

Es ist bekannt, dass die Morphologie einer Membran entscheidend deren Einsatzgebiet bestimmt. Die Selektivität und Permeabilität wird durch die Oberflächenstruktur, -belegung einer porösen Membran definiert, während durch den inneren Aufbau die mechanischen Eigenschaften einer Membran beeinflusst werden. Bei der Fertigung einer Membran ist man daher bestrebt, sowohl Oberfläche als auch innere Struktur durch geeignete Kombination der beim Herstellungsverfahren eingestellten Parameter gezielt zu steuern. Wichtige Einflussgrößen, wie Art und Zusammensetzung der verwendeten Polymeren und Lösungsmittel für die Membranbildung sind ausführlich in EP-A 0 168783 beschrieben worden.

In der EP-A 0 168 783 werden asymmetrische mikroporöse Hohlfasermembranen für die Blutbehandlung beschrieben, welche aus über 90 Gew.-% eines hydrophoben Polysulfons als Matrixpolymer bestehen und weiterhin 1 bis 10 Gew.-% des hydrophilen Polyvinylpyrrolidons enthalten, gut mit Wasser benetzbar sind und eine ausgezeichnete Biokompatibilität aufweisen, d.h. dass die im Blut enthaltenen Stoffe des körpereigenen Abwehrsystems nicht auf die Oberfläche der Membranen ansprechen. Die inkompatiblen hydrophilen Polymere dienen als Porengeber und werden nach Verfestigung aus der Membran herausgewaschen, wobei ein geringer Anteil zum Zwecke der Hydrophilierung der sonst hydrophoben Membran verbleiben soll.

Das Verbleiben eines Teils des hydrophilen PVP in der Matrix des Polysulfons wird gemäß EP-A 0 168 783 dadurch erreicht, dass die Lösung der beiden Polymere in einem eng umrissenen Viskositätsbereich extrudiert wird, womit erreicht wird, dass die Struktur des extrudierten hohlfaserigen Gebildes bis zur Fällung des faserbildenden Polymers aufrecht erhalten bleibt und bei der Fällung zwar der größte Teil des eingesetzten PVP aus der Spinnmasse herausgewaschen wird, aber dennoch ein Teil in der Membran verbleibt.

In der DE-A 19817364 wird die Herstellung von Membranen mit vorbestimmter Hydrophilie und Porosität beschrieben. Dazu wird ein hydrophiles Polymer mit bimodaler Molekulargewichtsverteilung verwendet. Der niedermolekulare, besser nach der Fällung auswaschbare Anteil dient hier zur gezielten Einstellung der Porosität. Der hochmolekulare, weniger gut auswaschbare Anteil hingegen bestimmt die Hydrophilie der Membran.

Aus der EP-A 0 550 798 ist bekannt, dass in Membranen, wie sie beispielsweise gemäß der EP-A 0 168 783 erhalten werden, noch wasserlösliches PVP enthalten ist. Danach lässt sich nicht vermeiden, dass aus diesen Membranen bei vielfacher Wiederverwendung jeweils minimale Mengen an das zu filtrierende Medium abgegeben werden. Dadurch verändert sich unter anderem das Retentionsverhalten solcher Membranen zu unschärferen Trenngrenzen. Möglichkeiten, das in Polysulfonmembranen enthaltende PVP wasserunlöslich zu machen, werden zum Beispiel in der EP-A 0 082 433 und der EP-A 0 550 798 beschrieben. Dort wird Quervernetzung mittels chemischer Vernetzung bzw. Vernetzung mittels ionisierender Strahlung beschrieben.

Aus der EP-A 0 876 819 und der EP-A 0 953 358 ist die Verwendung von Copolymeren aus N-Vinyllactamen oder N-Vinylamin-Verbindungen und hydrophob modifizierten Monomeren als Matrixkomponenten zur Herstellung von festen pharmazeutischen oder kosmetischen Darreichungsformen bekannt.

Aus der WO 02/09857 sind Hohlfasermembranen auf Basis von Synthetischen Polymeren wie beispielsweise Polysulfonen, Polycarbonaten, Polyamiden, Polyvinylchlorid, Polyacrylaten oder Polyurethanen bekannt, deren Oberflächen zur Hydrophilisierung mit Copolymeren von 2-Methacryloloxyethylphosphorylcholinen, welche eine verringerte Auswaschbarkeit aufweisen, modifiziert sind.

Aus der US-A 4.304,591 sind für die Herstellung von semipermeablen Membranen geeignete Hydrogele bekannt. Solche Hydrogele weisen hydrophobe Makromer-Segmente und hydrophile Segmente auf und können durch vernetzende Copolymerisation eines diolefinischen Polykondensationsproduktes als Makromer mit hydrophilen Monomeren wie N-Vinylpyrrolidon und hydrophoben Alkylacrylaten erhalten werden.

Der vorliegenden Erfindung liegt die Aufgabe zugrunde, bei gleichbleibender Porosität der Membran die Auswaschbarkeit der hydrophilisierenden Komponente mit einer alternativen Methode zu verringern oder ganz zu unterbinden.

Demgemäß wurde die Verwendung der eingangs definierten Copolymeren A bei der Herstellung von semipermeablen Membranen sowie die entsprechenden Membranen gefunden.

Als Komponenten a) der Copolymeren A seien folgende polymerisierbare hydrophile Comonomere genannt:

N-Vinyllactame und N-Vinylamine, insbesondere N-Vinylpyrrolidon, N-Vinylpiperidon, N-Vinylcaprolactam, N-Vinylimidazol, N-Vinyl-2-Methylimidazol, N-Vinyl-4-Methylimidazol sowie N-Vinylformamid.

Bevorzugte hydrophile Komponenten sind N-Vinylpyrrolidon, N-Vinylimidazol und N-Vinylcaprolactam, besonders bevorzugt N-Vinylpyrrolidon.

Der Anteil der hydrophilen Monomerbausteine a) im Copolymerisat liegt im Bereich von 50 bis 99 Gew.-%, bevorzugt 60 bis 99 Gew.-%, besonders bevorzugt im Bereich von 65 bis 98 Gew.-%.

Als Komponenten b) seien folgende polymerisierbare hydrophobe Comonomere genannt:
b₁) Ester monoethylenisch ungesättigter C₃-C₈-Carbonsäuren mit einem C₈-C₃₀-Alkohol, bevorzugt einem C₁₂-C₂₂-Alkohol.

Unter monoethylenisch ungesättigten Carbonsäuren mit 3 bis 8 C-Atomen sind beispielsweise Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure zu verstehen.

Aus dieser Gruppe von Carbonsäuren werden bevorzugt Acrylsäure, Methacrylsäure, Maleinsäure oder Mischungen der genannten Carbonsäuren, besonders bevorzugt Methacrylsäure, verwendet.

Besondere Bedeutung kommt hierbei den Acryl- bzw. Methacrylsäureestern mit Fettalkoholen einer Kettenlänge von 12 bis 22 Kohlenstoffatomen zu.

Bevorzugt seien hier genannt: Myristylacrylat, Cetylacrylat, Stearylacrylat, Oleylacrylat, Behenylacrylat, Myristylmethacrylat, Cetylmethacrylat, Stearylmethacrylat, Oleylmethacrylat, Behenylmethacrylat, wobei aus dieser Gruppe besonders die C₁₂-C₂₂-Alkylester der Methacrylsäure bevorzugt sind.

Als weitere hydrophobe Comonomere b₂) können N-C₈-C₃₀-Alkyl- oder b₃) N,N-C₈-C₃₀-Dialkyl-substituierte Amide von monoethylenisch ungesättigten C₃-C₈-Carbonsäuren eingesetzt werden, wobei es sich bei den Alkylresten um aliphatische oder cycloaliphatische Alkylreste mit 8 bis 30, bevorzugt 8 bis 22, besonders bevorzugt 12 bis 18 Kohlenstoffatomen handelt.

Die amidierten monoethylenisch ungesättigten Carbonsäuren mit 3 bis 8 C-Atomen können, wie bereits oben genannt, beispielsweise für Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure stehen.

Aus dieser Gruppe von Carbonsäuren werden ebenfalls bevorzugt Acrylsäure, Methacrylsäure, Maleinsäure oder Mischungen der genannten Carbonsäuren verwendet.

Bevorzugte amidierte Comonomere sind beispielsweise N-Octylacrylamid, N-(2-Ethylhexyl)acrylamid, N-Nonylacrylamid, N-Decylacrylamid, N-Laurylacrylamid, N-Myristylacrylamid, N-Cetylacrylamid, N-Stearylacrylamid, N-Oleylacrylamid, N-Behenylacrylamid, N-Octylmethacrylamid, N-(2-Ethylhexyl)methacrylamid, N-Nonylmethacrylamid, N-Decylmethacrylamid, N-Laurylmethacrylamd, N-Myristylmethacrylamid, N-Cetylmethacrylamid, N-Stearylmethacrylamid, N-Oleylmethacrylamid, N-Behenylmethacrylamid, wobei aus dieser Gruppe besonders die C₁₂-C₁₈-Alkylamide hervorzuheben sind.

Als weitere zusätzliche Komponente b) können Vinylester langkettiger aliphatischer, gesättigter oder ungesättigter C₈-C₃₀-Carbonsäuren, wie z.B. Caprylsäure, Caprinsäure, Laurinsäure, Myristinsäure, Palmitinsäure, Stearinsäure, Arachinsäure, Behensäure, Lignocerinsäure, Cerotinsäure sowie Melissensäure eingesetzt werden. Bevorzugt finden Vinylester der oben genannten C₈-C₁₈-Carbonsäuren Verwendung.

Ferner können als Comonomere b₅) C₈-C₃₀-Alkyl-Vinylether, bevorzugt C₈-C₂₂-Alkyl-Vinylether copolymerisiert werden.

Als bevorzugte C₈-C₂₂-Alkylreste der Vinylether seien unverzweigte Alkylketten wie z.B. n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl sowie n-Octadecyl genannt.

Der Anteil der hydrophoben Monomerbausteine b) im Copolymerisat A liegt im Bereich von 1 bis 50 Gew.-%, bevorzugt 1 bis 40 Gew.-%, besonders bevorzugt im Bereich von 2 bis 35 Gew.-%.

Selbstverständlich können auch Mischungen aus zwei oder mehreren Carbonsäureestern, Carbonsäureamiden, Alkylvinylethern oder Vinylestern eingesetzt werden, solange die Summe der Anteile dieser Comonomere nicht 50 Gew-% überschreitet.

Gegebenenfalls kann es sinnvoll sein, neben den bereits genannten Monomerbausteinen a) und b) die im folgenden aufgezählten Comonomere c) für die Polymerisation zu verwenden:

Monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder Mischungen der genannten Carbonsäuren.

Die monoethylenisch ungesättigten Carbonsäuren können in Form der freien Säure und - soweit vorhanden - der Anhydride oder in partiell oder in vollständig neutralisierter Form bei der Copolymerisation eingesetzt werden. Zur Neutralisation verwendet man vorzugsweise Alkalimetall- oder Erdalkalimetallbasen, Ammoniak oder Amine, z.B. Natronlauge, Kalilauge, Soda, Pottasche, Natriumhydrogencarbonat, Magnesiumoxid, Calciumhydroxid, Calciumoxid, gasförmiges oder wässriges Ammoniak, Triethylamin, Ethanolamin, Diethanolamin, Triethanolamin, Morpholin, Diethylentriamin oder Tetra-ethylenpentamin.

Weitere geeignete Comonomere c) sind beispielsweise die C₁-C₄-Alkyl- oder Hydroh-yalkyl-Ester, Amide und Nitrile der oben angegebenen Carbonsäuren, z.B. Acrylsäuremethylester, Acrylsäureethylester, Methacrylsäure-methylester, Methacrylsäureethylester, Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, Acrylamid, Methacrylamid, N,N-Dimethylacrylamid, N-tert.-Butylacrylamid, Acrylnitril, Methacrylnitril, Dimethylaminoethylacrylat, Diethylaminoethylacrylat, Diethylaminoethylmethacrylat sowie die Salze der zuletzt genannten Monomeren mit Carbonsäuren oder Mineralsäuren sowie die quaternierten Produkte.

Außerdem eignen sich als andere copolymerisierbare Monomere Acrylamidoglycolsäure, Vinylsulfonsäure, Allylsulfonsäure, Methallylsulfonsäure, Styrolsulfonsäure, Acrylsäure-(3-sulfopropyl)ester, Methacrylsäure(3-sulfopropyl)ester und Acrylamidomethylpropansulfonsäure sowie Phosphonsäuregruppen enthaltende Monomere, wie Vinylphosphonsäure, Allylphosphonsäure und Acrylamidomethylpropanphosphonsäure.

Der Anteil der Monomerbausteine c) im Copolymerisat kann im Bereich von 0 bis 30 Gew.-%, bevorzugt 0 bis 20 Gew.-%, besonders bevorzugt im Bereich von 0 bis 10 Gew.-% liegen, wobei sich die Gew.-% Angaben der Komponenten a) bis c) zu 100 % addieren.

Bevorzugte Verwendung finden wasserunlösliche Copolymere A, enthaltend
a) 60 bis 99 Gew.-% N-Vinylpyrrolidon und
b) 1 bis 40 Gew.-% mindestens eines Monomeren ausgewählt aus der Gruppe der
   b₁) C₈-C₃₀-Alkylester von monoethylenisch ungesättigten C₃-C₈-Carbonsäuren;
   b₂) N-C₈-C₃₀-Alkyl-substituierten Amide von monoethylenisch ungesättigten C₃-C₈-Carbonsäuren;
   b₃) N-N-C₈-C₃₀-Dialkyl-substituierten Amide von monoethylenisch ungesättigten C₃-C₈-Carbonsäuren;
   b₄) Vinylester von aliphatischen C₈-C₃₀-Carbonsäuren;
   b₅) C₈-C₃₀-Alkylvinylether.

Besonders bevorzugte Verwendung finden wasserunlösliche Copolymere A, enthaltend
a) 60 bis 99 Gew.-% N-Vinylpyrrolidon und
b) 1 bis 40 Gew.-% mindestens eines Monomeren ausgewählt aus der Gruppe der
   b₁) C₁₂-C₂₂-Alkylester von monoethylenisch ungesättigten C₃-C₈-Carbonsäuren;
   b₂) N-C₁₂-C₁₈-Alkyl-substituierten Amide von monoethylenisch ungesättigten C₃-C₈-Carbonsäuren;
   b₃) N,N-C₁₂-C₁₈-Dialkyl-substituierten Amide von monoethylenisch ungesättigten C₃-C₈-Carbonsäuren;
   b₄) Vinylester von aliphatischen C₈-C₁₈-Carbonsäuren;
   b₅) C₈-C₂₂-Alkylvinylether.

Insbesondere kommen Copolymere A, die als Monomerbausteine b) die Monomeren b₁) mit einem Alkylrest der Kettenlänge C₁₄ bis C₁₈ enthalten, in Betracht.

Die Herstellung der Copolymerisate erfolgt nach bekannten Verfahren, z.B. der Lösungs-, Fällungs-, Emulsions- oder umgekehrte Suspensionspolymerisation unter Verwendung von Verbindungen, die unter den Polymerisationsbedingungen Radikale bilden.

Die Polymerisationstemperaturen liegen üblicherweise in dem Bereich von 30 bis 200, vorzugsweise 40 bis 110°C.

Geeignete Initiatoren sind beispielsweise Azo- und Peroxyverbindungen sowie die üblichen Redoxinitiatorsysteme, wie Kombinationen aus Wasserstoffperoxid und reduzierend wirkenden Verbindungen, z.B. Natriumsulfit, Natriumbisulfit, Natriumformaldehydsulfoxilat und Hydrazin.

Die Copolymeren A besitzen K-Werte von mindestens 20, vorzugsweise 25 bis 100, besonders bevorzugt 30 bis 80. Die K-Werte werden bestimmt nach H. Fikentscher, Cellulose-Chemie, Band 13, 58 bis 64 und 71 bis 74 (1932) in wässriger oder alkoholischer Lösung bei 25°C, bei Konzentrationen, die je nach K-Wert-Bereich zwischen 0,1 % und 5 % liegen.

Das mittlere Molekulargewicht der erfindungsgemäß verwemdeten Polymere A liegt im Bereich von 30000 bis 10000000, bevorzugt 35000 bis 2000000, besonders bevorzugt von 40000 bis 1500000.

Die erhaltenen Polymer-Dispersionen oder Lösungen können durch verschiedene Trocknungsverfahren wie z.B. Sprühtrocknung, Fluidized Spray Drying, Walzentrocknung oder Gefriertrocknung in Pulverform überführt werden, aus der sich durch Redispergieren in Wasser erneut eine wässrige Dispersion herstellen lässt.

Neben den erfindungsgemäß zu verwendenden Copolymeren A enthalten die Membranen als weitere Komponente B ein oder mehrere Polymere ausgewählt aus der Gruppe der Polysulfone wie Polyarylethersulfone, Polycarbonate, Polyamide, Polyvinylchlorid, hydrophob modifizierte Acrylsäurepolymere. Polyether, Polyurethane, Polyurethancopolymere, wasserunlsöliche Cellulosederivate wie Celluloseacetate, Cellulosenitrate und Mischungen davon. Die Herstellung dieser Polymeren ist allgemein bekannt. Sie können bei der Herstellung der Membranen in Mengen von 50 bis 99,9 Gew.-%, bevorzugt 60 bis 90 Gew.-%, eingesetzt werden. Bevorzugt werden Polysulfone, Polyamide oder Blends aus Polysulfonen und Polyamiden eingesetzt.

Zusätzlich können die Membranen noch ein oder mehrere hydrophile Polymeren C ausgewählt aus der Gruppe der Polyvinylpyrrolidone, Polyethylenglykole, Polyglykolmonoester, Poly-ethylenglykolpropylenglykol-copolymere, wasserlöslichen Cellulosederivate und der Polysorbate enthalten. Diese hydrophilen Polymere C können in Mengen von 0 bis 50 Gew.-%, bevorzugt 10 bis 40 Gew.-% bei der Herstellung der Membranen eingesetzt werden. Bevorzugt werden als Polymere C Polyvinylpyrrolidone eingesetzt, besonders bevorzugt in Kombination mit Polysulfonen, Polyamiden oder Blends aus Polysulfonen und Polyamiden.

Grundsätzlich eignen sich die erfindungsgemäß verwendeten Copolymere A zur Herstellung von verschiedensten benetzbaren Membrantypen wie mikroporösen Membranen, beispielsweise mikroporösen Hohlfasermembranen, homogenen Membranen, symmetrischen oder asymmetrischen Membranen. Bevorzugt lassen sich mikroporöse oder asymmetrische Membranen herstellen. Die Herstellung der verschiedenen Membrantypen ist dem Fachmann aus dem Stand der Technik bekannt.

Im allgemeinen werden die verschiedenen Komponenten in eine Lösung überführt, mit der dann auf geeignete Weise wie Gießen oder Spinnen die Formgebung erfolgt.

Die Herstellung der Membranen erfolgt auf an sich bekannte Weise, beispielsweise durch ein Phaseninversionsverfahren, wie es in der EP-A 082 433, auf die hiermit ausdrücklich Bezug genommen wird, beschrieben ist.

Weiterhin können auch Hohlfasermembranen durch Extrusion und Fällung einer polymerisathaltigen Spinnlösung erhalten werden. Ein solches Verfahren ist zum Beispiel in der EP-A 168 783, auf die hiermit ebenfalls Bezug genommen wird, beschrieben.

Überraschenderweise zeigte sich, dass sich bei Verwendung der erfindungsgemäßen Copolymere A der Anteil an auswaschbaren wasserlöslichen Polymerkomponenten einer Membran reduziert wird. Bei gleichbleibender Hydrophilie der Membranoberfläche ergaben sich, bei einer teilweisen oder vollständigen Substitution der wasserlöslichen Polymere durch die Copolymere eine permanente Membranoberfläche in Bezug auf Porengrößen und -verteilung.

Die folgenden Beispiele sollen das erfindungsgemäße Verfahren veranschaulichen, ohne es jedoch zu beschränken.

### Beispiele

### Beispiel 1

Eine Polymerlösung aus 16 Gew.-% Polysulfon (Ultrason E 6020P, BASF), 1 Gew.-% Polyvinylpyrrolidon mit einem K-Wert von 90, 7 Gew.-% Polyvinylpyrrolidon mit einem K-Wert von 30 und 1 Gew.-% eines Vinylpyrrolidon-Stearylmethacrylat-Copolymerisats (VP:StMA=70:30) in N-Methylpyrrolidon wurde mittels einer Gießvorrichtungein 200 µm dicker Polymerfilm auf eine PVC-Trägerbahn aufgetragen und in Wasser für 10 min bei 20°C koaguliert. Die Membran wurde bei 40°C für 24 h getrocknet.

Die trockene Membran wurde ausgewogen und im Anschluss für 30 min mit Wasser durchströmt. Der Gewichtsverlust wurde nach erneutem Trocknen bei 40°C für 24 h bestimmt. Zur Beurteilung des Auswaschens der hydrophilen Polymerkomponenten wurde dieses Verfahren zweimal nach 20 h bzw. 36 h Wasserdurchströmung wiederholt.

### Beispiel 2 bis 6

Die Membrane wurden aus Polymerlösungen unterschiedlicher Zusammensetzung analog der Herstellvorschrift aus Beispiel 1 erhalten. Der Gewichtsverlust der Membrane in den folgenden Beispielen wurde analog Beispiel 1 bestimmt.

| Beispiel | B | C | C | Copolymerisat A [Gew.-%] | Gewichtsverlust [%] | | |
|---|---|---|---|---|---|---|---|
| | Polysulfon [Gew.-%] | PVP K30 [Gew.-%] | PVP K90 [Gew.-%] | Zusammensetzung VP/SMA 70:30 | 0,5 h | 20 h | 36 h |
| 1 | 64 | 28 | 4 | 4 | 14,7 | 22,6 | 24,5 |
| 2 | 64 | 28 | 0 | 8 | 11,8 | 21,4 | 23,1 |
| 3 | 64 | 28 | 8 | 0 | 11,4 | 26,1 | 28,3 |
| 4 | 53,3 | 33,3 | 6,6 | 6,6 | 21,2 | 35,2 | 35,9 |
| 5 | 53,3 | 33,3 | 0 | 13,3 | 17,9 | 34,4 | 35,3 |
| 6 | 53,3 | 33,3 | 13,3 | 0 | 27,2 | 43,4 | 44,4 |

Die in der Tabelle angegebenen Gewichtsprozente beziehen sich auf den theoretisch zu erwartenden Gehalt im Trockenzustand der Membran.

### Beispiel 7 bis 12

An den gemäß den Beispielen 1 bis 6 erhaltenen Membranen wurden Kontaktwinkelmessungen mit einem Kontaktwinkelmessgerät des Typs OCAH200 der Fa. Data Physics durchgeführt.

| Beispiel | Membran aus Beispiel | Kontaktwinkel (dest. Wasser) [Grad] | | |
|---|---|---|---|---|
| | | 0,1s | 1s | 10s |
| 7 | 1 | 72 | 69 | 69 |
| 8 | 2 | 78 | 74 | 74 |
| 9 | 3 | 71 | 68 | 68 |
| 10 | 4 | 74 | 72 | 71 |
| 11 | 5 | 71 | 71 | 69 |
| 12 | 6 | 75 | 71 | 71 |

## Patentansprüche

1. Verwendung einer Polymerlösung von hydrophoben Polymeren B in Mengen von 50 bis 99,9 Gew.-%, bezogen auf die Gesamtmenge an eingesetzten Polymeren und Copolymeren A zur Herstellung von semipermeablen Membranen, wobei die Polymere B ausgewählt sind aus der Gruppe bestehend aus Polysulfonen, Polycarbonaten, Polyamiden, Polyvinylchlorid, hydrophob modifizierten Acrylsäurepolymeren, Polyethern, Polyurethanen, Polyurethancopolymeren, wasserunlöslichen Cellulosederivaten und Gemischen solcher Polymere, **dadurch gekennzeichnet, dass** Copolymere A enthaltend
a) 50 bis 99 Gew.-% mindestens eines N-Vinyllactams oder N-Vinylamins, ausgewählt aus der Gruppe, bestehend aus N-Vinylpyrrolidon, N-Vinylpiperidon, N-Vinylcaprolactam, N-Vinylimidazol, methyliertem N-Vinylimidazol und N-Vinylformamid, und
b) 1 bis 50 Gew.-% mindestens eines Monomeren ausgewählt aus der Gruppe der
b₁) C₉-C₃₀-Alkylester von monoethylenisch ungesättigten C₃-C₈-Carbonsäuren;
b₂) N-C₈-C₃₀-Alkyl-substituierten Amide von monoethylenisch ungesättigten C₃-C₈-Carbonsäuren;
b₃) N,N-C₈-C₃₀-Dialkyl-substituierten Amide von monoethylenisch ungesättigten C₃-C₈-Carbonsäuren;
b₄) Vinylester von aliphatischen C₈-C₃₀-Carbonsäuren;
b₅) C₈-C₃₀-Alkylvinylether,
verwendet werden.

2. Verwendung nach Anspruch 1, **dadurch gekennzeichnet, dass** Copolymere A, enthaltend
a) 60 bis 99 Gew.-% N-Vinylpyrrolidon und
b) 1 bis 40 Gew.-% mindestens eines Monomeren ausgewählt aus der Gruppe der
b₁) C₈-C₃₀-Alkylester von monoethylenisch ungesättigten C₃-C₈-Carbonsäuren:
b₂) N-C₈-C₃₀-Alkyl-substituierten Amide von monoethylenisch ungesättigten C₃-C₈-Carbonsäuren;
b₃) N,N-C₈-C₃₀-Dialkyl-substituierten Amide von monoethylenisch ungesättigten C₃-C₈-Carbonsäuren;
b₄) vinylester von aliphatischen C₈-C₃₀-Carbonsäuren:
b₅) C₈-C₃₀-Alkylvinylether
verwendet werden.

3. Verwendung nach Anspruch 1 oder 2, **dadurch gekennzeichnet, dass** Copolymere A, enthaltend
a) 60 bis 99 Gew.-% N-Vinylpyrrolidon und
b) 1 bis 40 Gew.-% mindestens eines Monomeren ausgewählt aus der Gruppe der
b₁) C₁₂-C₂₂-Alkylester von monoethylenisch ungesättigten C₃-C₈-Carbonsäuren;
b₂) N-C₁₂-C₁₈-Alkyl-substituierten Amide von monoethylenisch ungesättigten C₃-C₈-Carbonsäuren:
b₃) N,N-C₁₂-C₁₈-Dialkyl-substituierten Amide von monoethylenisch ungesättigten C₃-C₈-Carbonsäuren;
b₄) Vinylester von aliphatischen C₈-C₁₈-Carbonsäuren;
b₅) C₈-C₂₂-Alkylvinylether,
verwendet werden.

4. Verwendung nach einem der Ansprüche 1 bis 4, wobei die Copolymeren A in Mengen von 0,1 bis 25 Gew.-%, bezogen auf die Gesamtmenge an eingesetzten Polymeren, verwendet werden.

5. Verwendung nach einem der Ansprüche 1 bis 4, wobei die Copolymeren A in Kombination mit einem oder mehreren weiteren Polymeren eingesetzt werden.

6. Verwendung nach einem der Ansprüche 1 bis 5, **dadurch gekennzeichnet, dass** die Membranen zusätzlich als Polymere C hydrophile Polymere ausgewählt aus der Gruppe, bestehend aus Polyvinylpyrrolidonen, Polyethylenglykolen, Polyethylenglykolmonoestern. Polyethylenglykolpropylenglykolcopolymeren, wasserlöslichen Cellulosederivaten, Polysorbaten und Gemischen solcher Polymeren, enthalten.

7. Verwendung nach Anspruch 7, **dadurch gekennzeichnet, dass** die hydrophilen Polymere C in Mengen von 10 bis 40 Gew.-%, bezogen auf die Gesamtmenge an eingesetzten Polymeren, eingesetzt werden.

8. Semipermeable mit Wasser benetzbare Membran, hergestellt unter Verwendung einer Lösung enthaltend mindestens ein Copolymer A und als hydrophobe Polymerkomponente B ein Polymer ausgewählt aus der Gruppe bestehend aus Polysulfonen, Polycarbonaten, Polyamiden, Polyvinylchlorid, hydrophob modifizierten Acrylsäurepolymeren, Polyethern, Polyurethanen, Polyurethancapolymeren, Celluloseacetaten, Cellulosenitraten und Mischungen davon in Mengen von 50 bis 99,9 Gew.-%, bezogen auf die Gesamtmenge der Polymere, **dadurch gekennzeichnet, dass** Copolymere A enthaltend
a) 50 bis 99 Gew.-% mindestens eines N-Vinyllactams oder N-Vinylamins, ausgewählt aus der Gruppe bestehend aus N-Vinylpyrrolidon, N-Vinylpiperidon, N-Vinylcaprolactam, N-Vinylimidazol, methyliertem N-Vinylimidazol und N-Vinylformamid, und
b) 1 bis 50 Gew.-% mindestens eines Monomeren ausgewählt aus der Gruppe der
b₁) C₈-C₃₀-Alkylester von monoethylenisch ungesättigten C₃-C₈-Carbonsäuren,
b₂) N-C₈-C₃₀-Alkyl-substituierten Amide von monoethylenisch ungesättigten C₃-C₈-Carbonsäuren,
b₃) N,N-C₈-C₃₀-Dialkyl-substituierten Amide von monoethylenisch ungesättigten C₃-C₈-Carbonsäuren,
b₄) Vinylester von aliphatischen C₈-C₃₀-Carbonsäuren, und
b₅) C₈-C₃₀-Alkylvinylether,
verwendet werden.

9. Membran nach Anspruch 8, erhältlich unter Verwendung von Copolymeren A in Mengen von 0,1 bis 25 Gew.-%.

10. Membran nach Anspruch 9 **dadurch gekennzeichnet, dass** die Membran zusätzlich ein hydrophiles Polymer C ausgewählt aus der Gruppe, bestehend aus Polyvinylpyrrolidonen, Polyethylenglykolen, Polyglykolmonoestern, Copolymeren von polyethylenglykol mit Propylenglykol, wasserlöslichen Derivaten der Zellulose, Polysorbaten und Mischungen davon, enthält.

## Claims

1. The use of a polymer solution of hydrophobic polymers B in amounts of from 50 to 99.9% by weight, based on the total amount of polymers used, and of a copolymer A to produce a semipermeable membrane, the polymers B being selected from the group consisting of polysulfones, polycarbonates, polyamides, polyvinyl chloride, hydrophobically modified acrylic polymers, polyethers, polyurethanes, polyurethane copolymers, water-insoluble cellulose derivatives, and mixtures of such polymers, wherein copolymers A comprising
a) from 50 to 99% by weight of at least one N-vinyllactam or N-vinylamine selected from the group consisting of N-vinylpyrrolidone, N-vinylpiperidone, N-vinylcaprolactam, N-vinylimidazole, methylated N-vinylimidazole, and N-vinylformamide, and
b) from 1 to 50% by weight of at least one monomer selected from the group consisting of
b₁) C₉-C₃₀-alkyl esters of monoethylenically unsaturated C₃-C₈ carboxylic acids;
b₂) N-C₈-C₃₀-alkyl-substituted amides of monoethylenically unsaturated C₃-C₈ carboxylic acids;
b₃) N,N-C₈-C₃₀-dialkyl-substituted amides of monoethylenically unsaturated C₃-C₈ carboxylic acids;
b₄) vinyl esters of aliphatic C₈-C₃₀ carboxylic acids; and
b₅) C₈-C₃₀-alkyl vinyl ethers
are used.

2. The use according to claim 1, wherein copolymers A comprising
a) from 60 to 99% by weight of N-vinylpyrrolidone and
b) from 1 to 40% by weight of at least one monomer selected from the group consisting of
b₁) C₈-C₃₀-alkyl esters of monoethylenically unsaturated C₃-C₈ carboxylic acids;
b₂) N-C₈-C₃₀-alkyl-substituted amides of monoethylenically unsaturated C₃-C₈ carboxylic acids;
b₃) N,N-C₈-C₃₀-dialkyl-substituted amides of monoethylenically unsaturated C₃-C₈ carboxylic acids;
b₄) vinyl esters of aliphatic C₈-C₃₀ carboxylic acids; and
b₅) C₈-C₃₀-alkyl vinyl ethers
are used.

3. The use according to claim 1 or 2, wherein copolymers A comprising
a) from 60 to 99% by weight of N-vinylpyrrolidone and
b) from 1 to 40% by weight of at least one monomer selected from the group consisting of
b₁) C₁₂-C₂₂-alkyl esters of monoethylenically unsaturated C₃-C₈ carboxylic acids;
b₂) N-C₁₂-C₁₈-alkyl-substituted amides of monoethylenically unsaturated C₃-C₈ carboxylic acids;
b₃) N,N-C₁₂-C₁₈-dialkyl-substituted amides of monoethylenically unsaturated C₃-C₈ carboxylic acids;
b₄) vinyl esters of aliphatic C₈-C₁₈ carboxylic acids; and
b₅) C₈-C₂₂-alkyl vinyl ethers
are used.

4. The use according to any of claims 1 to 4, wherein the copolymer A is used in amounts of from 0.1 to 25% by weight, based on the total amount of polymers used.

5. The use according to any of claims 1 to 4, wherein the copolymer A is used in combination with one or more further polymers.

6. The use according to any of claims 1 to 5, wherein the membrane further comprises, as polymers C, hydrophilic polymers selected from the group consisting of polyvinylpyrrolidones, polyethylene glycols, polyethylene glycol monoesters, polyethylene glycol-propylene glycol copolymers, water-soluble cellulose derivatives, polysorbates, and mixtures of such polymers.

7. The use according to claim 7, wherein the hydrophilic polymers C are used in amounts of from 10 to 40% by weight, based on the total amount of polymers used.

8. A semipermeable, water-wettable membrane prepared using a solution comprising at least one copolymer A and, as hydrophobic polymer component B a polymer selected from the group consisting of polysulfones, polycarbonates, polyamides, polyvinyl chloride, hydrophobically modified acrylic polymers, polyethers, polyurethanes, polyurethane copolymers, cellulose acetates, cellulose nitrates, and mixtures thereof in amounts of from 50 to 99.9% by weight, based on the total amount of the polymers, wherein copolymers A comprising
a) from 50 to 99% by weight of at least one N-vinyllactam or N-vinylamine selected from the group consisting of N-vinylpyrrolidone, N-vinylpiperidone, N-vinylcaprolactam, N-vinylimidazole, methylated N-vinylimidazole, and N-vinylformamide, and
b) from 1 to 50% by weight of at least one monomer selected from the group consisting of
b₁) C₈-C₃₀-alkyl esters of monoethylenically unsaturated C₃-C₈ carboxylic acids;
b₂) N-C₈-C₃₀-alkyl-substituted amides of monoethylenically unsaturated C₃-C₈ carboxylic acids;
b₃) N,N-C₈-C₃₀-dialkyl-substituted amides of monoethylenically unsaturated C₃-C₈ carboxylic acids;
b₄) vinyl esters of aliphatic C₈-C₃₀ carboxylic acids; and
b₅) C₈-C₃₀-alkyl vinyl ethers,
are used.

9. The membrane according to claim 8, obtainable using a copolymer A in amounts of from 0.1 to 25% by weight.

10. The membrane according to claim 9 comprising in addition a hydrophilic polymer C selected from the group consisting of polyvinylpyrrolidones, polyethylene glycols, polyglycol monoesters, copolymers of polyethylene glycol with propylene glycol, water-soluble derivatives of cellulose, polysorbates, and mixtures thereof.

## Revendications

1. Utilisation d'une solution polymère de polymères hydrophobes B, dans des quantités de 50 à 99,9 % en poids par rapport à la quantité totale de polymères utilisés, et de copolymères A pour la préparation de membranes semi-perméables, les polymères B étant sélectionnés dans le groupe composé de polysulfones, de polycarbonates, de polyamides, de chlorure de polyvinyle, de polymères d'acide acrylique modifiés de manière hydrophobe, de polyéthers, de polyuréthannes, de copolymères de polyuréthanne, de dérivés cellulosiques insolubles dans l'eau et de mélanges de tels polymères, **caractérisée en ce que** des copolymères A contenant :
a) 50 à 99 % en poids au moins d'un N-vinyllactame ou d'une N-vinylamine, sélectionnée dans le groupe composé de N-vinylpyrrolidone, N-vinylpipéridone, N-vinylcaprolactame, N-vinylimidazole, N-vinylimidazole méthylé et N-vinylformamide, et
b) 1 à 50 % en poids d'au moins un monomère sélectionné dans le groupe des :
b1) C₈-C₃₀-alkylesters d'acides C₃-C₈₋carboxyliques monoéthyléniquement insaturés;
b2) amides N-C₈-C₃₀-alkyl-substitués d'acides C₃-C₈-carboxyliques monoéthyléniquement insaturés;
b3) amides N, N-C₈-C₃₀-dialkylsubstitués d'acides C₃-C₈-carboxyliques monoéthyléniquement insaturés;
b4) esters vinyliques d'acides C₈-C₃₀₋carboxyliques aliphatiques;
b5) éthers C₈-C₃₀-alkylvinyliques sont utilisés.

2. Utilisation selon la revendication 1, **caractérisée en ce que** des copolymères A contenant :
a) 60 à 99 % en poids de N-vinylpyrrolidone et
b) 1 à 40 % en poids d'au moins un monomère sélectionné dans le groupe des :
b1) C₈-C₃₀-alkylesters d'acides C₃-C₈₋carboxyliques monoéthyléniquement insaturés;
b2) amides N-C₈-C₃₀-alkyl-substitués d'acides C₃-C₈-carboxyliques monoéthyléniquement insaturés;
b3) amides N,N-C₈-C₃₀-dialkylsubstitués d'acides C₃-C₈-carboxyliques monoéthyléniquement insaturés;
b4) esters vinyliques d'acides C₈-C₃₀₋carboxyliques aliphatiques;
b5) éthers C₈-C₃₀-alkylvinyliques sont utilisés.

3. Utilisation selon la revendication 1 ou 2, **caractérisée en ce que** des copolymères A contenant :
a) 60 à 99 % en poids de N-vinylpyrrolidone et
b) 1 à 40 % en poids d'au moins un monomère sélectionné dans le groupe des :
b1) C₁₂-C₂₂-alkylesters d'acides C₃-C₈₋carboxyliques monoéthyléniquement insaturés;
b2) amides N-C₁₂- C₁₈-alkyl-substitués d'acides C₃-C₈-carboxyliques monoéthyléniquement insaturés;
b3) amides N,N-C₁₂- C₁₈-dialkylsubstitués d'acides C₃-C₈-carboxy-liques monoéthyléniquement insaturés;
b4) esters vinyliques d'acides C₈- C₁₈₋carboxyliques aliphatiques;
b5) éthers C₈-C₂₂-alkylvinyliques sont utilisés.

4. Utilisation selon l'une des revendications 1 à 4, dans laquelle les copolymères A sont utilisés dans des quantités de 0,1 à 25 % en poids par rapport à la quantité totale de polymères utilisés.

5. Utilisation selon l'une des revendications 1 à 4, dans laquelle les copolymères A sont utilisés en combinaison avec un ou plusieurs polymères supplémentaires.

6. Utilisation selon l'une des revendications 1 à 5, **caractérisée en ce que** les membranes contiennent en plus comme polymères C des polymères hydrophiles sélectionnés dans le groupe composé de polyvinylpyrrolidones, de polyéthylèneglycols, de monoesters de polyéthylèneglycol, de copolymères polyéthylèneglycol/propylèneglycol, de dérivés cellulosiques solubles dans l'eau, de polysorbates et mélanges de ces polymères.

7. Utilisation selon la revendication 7, **caractérisée en ce que** les polymères C hydrophiles sont utilisés dans des quantités de 10 à 40 % en poids, par rapport à la quantité totale de polymères utilisés.

8. Membrane semi-perméable mouillable à l'eau préparée en utilisant une solution contenant au moins un copolymère A et comme composant hydrophobe un composant polymère B sélectionné dans le groupe composé de polysulfones, de polycarbonates, de polyamides, de chlorure de polyvinyle, de polymères d'acide acrylique modifiés de manière hydrophobe, de polyéthers, de polyuréthannes, de copolymères de polyuréthanne, d'acétates de cellulose, de nitrates de cellulose et de mélanges de ceux-ci dans des quantités de 50 à 99,9 % en poids par rapport à la quantité totale de polymères, **caractérisée en ce que** des copolymères A contenant :
a) 50 à 99 % en poids au moins d'un N-vinyllactame ou d'une N-vinylamine, sélectionnée dans le groupe composé de N-vinylpyrrolidone, N-vinylpipéridone, N-vinylcaprolactame, N-vinylimidazole, N-vinylimidazole méthylé et N-vinylformamide, et
b) 1 à 50 % en poids d'au moins un monomère sélectionné dans le groupe des
b1) C₈-C₃₀-alkylesters d'acides C₃-C₈₋carboxyliques monoéthyléniquement insaturés;
b2) amides N-C₈-C₃₀-alkylsubstitués d'acides C₃-C₈-carboxyliques monoéthyléniquement insaturés;
b3) amides N,N-C₈-C₃₀-dialkylsubstitués d'acides C₃-C₈-carboxyliques monoéthyléniquement insaturés;
b4) esters vinyliques d'acides C₈-C₃₀₋carboxyliques aliphatiques;
b5) éthers C₈-C₃₀-alkylvinyliques sont utilisés.

9. Membrane selon la revendication 8, obtenue en utilisant des copolymères A dans des quantités de 0,1 à 25 % en poids.

10. Membrane selon la revendication 9, **caractérisée en ce que** la membrane contient en plus un polymère C hydrophile sélectionné dans le groupe composé des polyvinylpyrrolidones, des polyéthylèneglycols, des monoesters de polyglycol, des copolymères polyéthylèneglycol/propylèneglycol, des dérivés cellulosiques solubles dans l'eau, des polysorbates et mélanges de ceux-ci.
